# EUROPEAN PATENT SPECIFICATION

(11) **EP 2 664 471 B1**
(45) Date of publication and mention of the grant of the patent: **03.05.2017**
(21) Application number: 13167686.8
(22) Date of filing: 14.05.2013
(51) Int. Cl.: B60H 1/32, B60H 1/00

(54) **Air conditioner for vehicle and vehicle**
Klimaanlage für ein Fahrzeug und Fahrzeug
Conditionneur d'air pour véhicule et véhicule

(30) Priority: 16.05.2012 JP 2012112264
(43) Date of publication of application: 20.11.2013
(73) Proprietor: Valeo Japan Co., Ltd., Saitama 360-0193 (JP); Mazda Motor Corporation, Aki-gun, Hiroshima 730-8670 (JP)
(72) Inventor: Tsuji, Teruaki, Kumagaya-shi, Saitama 360-0193 (JP); Yoshida, Makoto, Aki-gun, Hiroshima 730-8670 (JP)
(74) Representative: Prinz & Partner mbB

(56) References cited:
- DE-A1- 10 124 757
- DE-A1-102006 022 249
- DE-A1-102007 013 459
- JP-A- 2001 213 151
- US-A1- 2002 134 093

## Description

### BACKGROUND OF THE INVENTION

### 1. Field of the Invention

The present invention relates to an air conditioner mounted on a vehicle capable of traveling by an engine and has an engine automatic start and stop function capable of automatically starting or stopping the engine, and a vehicle on which the air conditioner is mounted.

### 2. Description of the Related Art

From a viewpoint of a strong demand for energy saving and the like in recent years, there has been a desire for greater fuel efficiency with a vehicle having an engine automatic start and stop function. With respect to a compressor which constitutes a refrigerating cycle of an air conditioner and is driven by an engine, there has been a demand for a technique which can lower a driving rate of the compressor at the time of cooling operation during traveling of a vehicle, and can extend an OFF time of driving of the compressor and a stop time of the engine by slowing down the elevation of a cabin temperature caused by stopping of the compressor while the vehicle is stopped.

To satisfy such a demand for the improvement of fuel efficiency of the vehicle through the lowering of the driving rate of the compressor and the extension of the stop time of the compressor and the engine, there has been already proposed an air conditioner for vehicle which is described in JP-A-2001-213151 (patent literature 1), for example.

The operation of the an air conditioner for vehicle can be, at the time of operating the compressor, switched between an ordinary mode where a temperature of an evaporator is controlled to a temperature level at which a condensate is not frozen and a cool storage mode where the temperature of the evaporator is controlled to a temperature level below a freezing point so that the condensate is frozen. Here, with respect to a stop target temperature at which the compressor is stopped and a restart target temperature at which the compressor is restarted, the restart target temperature in a cool storage mode is set lower than the restart target temperature in an ordinary mode so that a hysteresis width which is the difference between the stop target temperature and the restart target temperature in a cool storage mode is set smaller than that in an ordinary mode.

In such an air conditioner for vehicle, the selection of the ordinary mode or the cool storage mode is performed based on a reference target blowout temperature TAO in such a manner that when high cooling capacity is desired because of the case where cooling has just started or an outside air temperature is high and the number of occupants is large, the reference target blowout temperature TAO is in a temperature region lower than a predetermined value so that the ordinary mode is selected, while when high cooling capacity is not requested, the reference target blowout temperature TAO is in a temperature region higher than the predetermined value so that the cool storage mode is selected.

DE 10 2006 022 249 A1 describes an air conditioning method and an air conditioning system which is adapted for charging a cool storage depending from a parameter which is an estimated stop of the vehicle. The basic concept of this document is to charge the cool storage in advance of a vehicle stop. The temperature of the evaporator in the cool storage mode is controlled depending on the remaining time which is available until the next stop:
US 2002/134 093 A describes an air conditioning method and an air conditioning system which is adapted for charging a cool storage depending from an estimated stop of the vehicle. For making this estimation, a navigation unit is provided which allows the air conditioning system to guess when the next vehicle stop will be. An outside air temperature is taken into account only during normal operation of the air conditioning system.

### SUMMARY OF THE INVENTION

However, in the air conditioner for vehicle described in patent literature 1, in the control of a temperature of the evaporator, the selection between the ordinary mode and the cool storage mode is performed based on the reference target blowout temperature TAO. Accordingly, the ordinary mode is selected or the cool storage mode is selected regardless of a traveling state of the vehicle and hence, depending on the result of selection, a load of the compressor is further applied when the engine is in a high load state thus giving rise to a drawback that fuel efficiency of the vehicle deteriorates.

Further, in the air conditioner for vehicle described in patent literature 1, the ordinary mode is selected when high cooling capacity is required so that cold is not stored in a condensate in the evaporator whereby a cabin temperature is elevated quickly when the engine is automatically stopped in a state where heat loads inside and outside the vehicle are high thus also giving rise to a drawback that a sufficient engine stop time cannot be acquired.

Accordingly, it is an object of the present invention to provide an air conditioner for vehicle which can reduce fuel consumption of a vehicle by surely reducing a driving rate of a compressor (a rate at which the compressor is driven) when an engine is in a high load state by selecting an ordinary mode or a cool storage mode by taking into account a traveling state in controlling a temperature of an evaporator, and can properly extend an idling stop time of the engine corresponding to a heat load around an occupant or the vehicle by changing a cool storage amount of the evaporator or a cool storage heat exchanger corresponding to a heat load.

It is also an object of the present invention to provide a vehicle on which the air conditioner for vehicle is mounted.

According to one aspect of the present invention, there is provided an air conditioner for vehicle mounted on a vehicle which is capable of traveling by an engine and has an engine automatic start and stop function capable of automatically starting and stopping the engine, the air conditioner for vehicle including: a refrigerating cycle which is constituted by suitably joining a compressor which is driven using the engine as a drive source and compresses a refrigerant, a condenser which condenses the compressed refrigerant, a decompression and expansion device which decompresses and expands the condensed refrigerant, and an evaporator which evaporates the decompressed and expanded refrigerant and has a cool storage function by piping; an evaporator temperature detection means which detects a temperature of the evaporator; and a control means which controls an operation state of the compressor, wherein the control means is capable of controlling the temperature of the evaporator by controlling the operation state of the compressor, the control means, when the control means determines that the temperature of the evaporator is to be controlled in an ordinary mode, controls the operation state of the compressor such that the temperature of the evaporator detected by the evaporator temperature detection means approaches a target temperature of the evaporator introduced from an ordinary mode target temperature map, and the control means, when the control means determines that the temperature of the evaporator is to be controlled in a cool storage mode, controls the operation state of the compressor such that the temperature of the evaporator detected by the evaporator temperature detection means approaches a target temperature of the evaporator introduced from a cool storage mode target temperature map, the target temperature defined by the cool storage mode target temperature map and the ordinary mode target temperature map is based on the outside air temperature.. Here, the compressor includes both a fixed capacity type compressor and a variable capacity type compressor. The evaporator temperature detection means is an evaporator temperature sensor, for example. Further, the control means is a control unit in a broader meaning including both of a vehicle-side control unit and an air-conditioning-side control unit, for example.

In this manner, in controlling the temperature of the evaporator, the control means determines whether the temperature of the evaporator is to be controlled in an ordinary mode or in a cool storage mode based on a traveling state of the vehicle. Accordingly, the control means can grasp a load state of the engine through a traveling state of the vehicle and hence, the control means can prevent a load of the compressor from being further applied to the engine when the engine is in a high-load state thus preventing the deterioration of fuel efficiency of the vehicle. Further, even when the evaporator is controlled at a low temperature in a state where the engine is not in a high load state so that the vehicle is stopped and the engine is automatically stopped, the sufficiently long engine idling stop time can be ensured.

In the above-mentioned air conditioner for vehicle, the ordinary mode target temperature map and the cool storage mode target temperature map may be, within a range where the heat load is a first predetermined value or more, set such that the target temperature of the evaporator set in a cool storage mode target temperature map is lower than the target temperature of the evaporator set in an ordinary mode target temperature map, and the target temperatures may have the first temperature difference.

In this manner, in the range where the heat load is not smaller than the first predetermined value, the target temperature of the evaporator set in a cool storage mode target temperature map is set lower than the target temperature of the evaporator set in an ordinary mode target temperature map and hence, when it is determined that the temperature of the evaporator is to be controlled in a cool storage mode in a state where the heat load is large, cold can be securely stored in the evaporator so that the engine idling stop time can be sufficiently ensured.

In the above-mentioned air conditioner for vehicle, the ordinary mode target temperature map and the cool storage mode target temperature map are, within a range where a heat load is smaller than the first predetermined value, set such that the target temperature of the evaporator set in a cool storage mode target temperature map is lower than the target temperature of the evaporator set in an ordinary mode target temperature map, the target temperatures have a second temperature difference, and the second temperature difference is set smaller than the first temperature difference.

In this manner, within a range where the heat load is smaller than the first predetermined value, the target temperature of the evaporator set in a cool storage mode target temperature map is set lower than the target temperature of the evaporator set in an ordinary mode target temperature map, and the temperature difference in the target temperature of the evaporator between two modes is set relatively smaller than the temperature difference within a range where the heat load is larger than the first predetermined value. Accordingly, when it is determined that the temperature of the evaporator is to be controlled in a cool storage mode in a state where the heat load is not so large, a calorific value of cold is small although cold is stored in the evaporator and hence, the excessive driving of the compressor can be prevented whereby a vehicle fuel consumption reduction effect can be acquired. Further, the vehicle is in the thermal environment where the heat load is not so large and hence, it is possible to sufficiently ensure the engine idling stop time. In this manner, an amount of cool storage can be changed corresponding to a heat load.

In the above-mentioned air conditioner for vehicle, the ordinary mode target temperature map and the cool storage mode target temperature map are, within a range where the heat load is further smaller than a second predetermined value which is a value smaller than the first predetermined value, set such that there is no second temperature difference.

In this manner, in the range where the heat load is even smaller than the second predetermined value which is the value smaller than the first predetermined value, there is no temperature difference between the target temperature of the evaporator set in an ordinary mode target temperature map and the target temperature of the evaporator set in a cool storage mode target temperature map. Accordingly, even when it is determined that the temperature of the evaporator is to be controlled in a cool storage mode in a state where the heat load is relatively small, the cool storage amount of the evaporator in a cool storage mode is substantially equal to the cool storage amount of the evaporator in an ordinary mode and hence, the calorific value is extremely small. Accordingly, a vehicle fuel consumption reduction effect can be acquired by preventing excessive driving of the compressor with even more reliability, and an engine idling stop time can be sufficiently ensured since the heat load is smaller. In this manner, the cool storage amount can be changed corresponding to the heat load.

In performing the dehumidification heating in a cold period, a temperature of the evaporator is controlled from a viewpoint of the fogging up prevention of a window pane rather than from a viewpoint of cooling the inside of a cabin so that the reliable dehumidification is required both in an ordinary mode and in a cool storage mode. Since there is no difference between target temperatures of the evaporator set in the target temperature maps, there is no difference in a dehumidifying amount between an ordinary mode and a cool storage mode whereby the fogging up prevention capability can be kept unchanged even when the operation mode is changed.

In the above-mentioned air conditioner for vehicle, the ordinary mode target temperature map and the cool storage mode target temperature map are respectively set such that a second target temperature of the evaporator corresponding to a state where the heat load is the second predetermined value smaller than the first predetermined value is set higher than a first target temperature of the evaporator corresponding to a state where the heat load is the first predetermined value.

In this manner, the target temperature of the evaporator when the heat load is relatively low is set higher than the target temperature of the evaporator when the heat load is relatively high. Accordingly, the controlled temperature of the evaporator is set higher when the heat load becomes small so that a driving rate of the compressor is lowered whereby a vehicle fuel consumption reduction effect can be acquired, while the controlled temperature of the evaporator is set lower when a heat load becomes large so that a cool storage amount of the evaporator is increased whereby an engine idling stop time can be sufficiently ensured. In this manner, a cool storage amount can be changed corresponding to the heat load.

In the above-mentioned air conditioner for vehicle according to the present invention, the evaporator includes a cool storage agent which changes a phase thereof within a predetermined temperature range thus capable of storing a cold or radiating heat, and in the ordinary mode target temperature map, the target temperature of the evaporator is set such that a compressor OFF temperature at which the control means turns off the driving of the compressor becomes higher than the predetermined temperature range of the cool storage agent within a range where the heat load is the first predetermined value or more.

Due to such a constitution, an operation and a time necessary for storing cold in the evaporator become unnecessary in an ordinary mode and hence, a driving rate of the compressor can be lowered whereby a vehicle fuel consumption reduction effect can be acquired more reliably.

Further, the evaporator includes a cool storage agent which changes a phase thereof within a predetermined temperature range thus capable of storing a cold or radiating heat, and

in the cool storage mode target temperature map, the target temperature of the evaporator is set such that a compressor ON temperature at which the control means turns on the driving of the compressor becomes lower than the predetermined temperature range of the cool storage agent within a range where the heat load is the first predetermined value or more.

Due to such a constitution, cold can be securely stored in the evaporator in a cool storage mode and hence, an engine idling stop time can be ensured.

The heat load may preferably be an air conditioning comprehensive signal which is calculated based on at least an outside air temperature of the vehicle, an inside air temperature of the vehicle, an air conditioning set temperature set by an occupant of the vehicle, and an amount of solar radiation. In this manner, by setting the heat load of the vehicle as the air conditioning comprehensive signal, a temperature control of the evaporator corresponding to an operation demand ability which the refrigerating cycle is required to satisfy can be performed and hence, the ordinary mode and the cool storage mode can be switched more properly.

On the other hand, the heat load may preferably be an outside air temperature of the vehicle. In this manner, by using the outside air temperature of the vehicle as the heat load, the ordinary mode and the cool storage mode can be switched without using any complicated control.

Further, the traveling state of the vehicle may preferably be determined based on a result of comparison between a speed of the vehicle and a predetermined speed, and the control means makes the determination that a temperature of the evaporator is controlled in an ordinary mode when the speed of the vehicle is the predetermined speed or more, and makes the determination that the temperature of the evaporator is controlled in a cool storage mode when the speed of the vehicle is less than the predetermined.

Due to such a constitution, the traveling state of the vehicle is determined based on the result of comparison between the speed of the vehicle and the predetermined speed and hence, the control means determines that the temperature of the evaporator is to be controlled in an ordinary mode when a speed of the vehicle is relatively fast so that a possibility of the vehicle stopping is low, and the control means performs a control of setting a temperature of the evaporator relatively higher thus lowering a driving rate of the compressor whereby a vehicle fuel consumption reduction effect can be acquired. Further, the control means determines that the temperature of the evaporator is to be controlled in a cool storage mode when a speed of the vehicle is relatively slow so that a possibility of the vehicle stopping is high, and the control means performs a control of setting the temperature of the evaporator relatively lower thus securely storing cold in the evaporator whereby an engine idling stop time can be sufficiently ensured.

On the other hand, the traveling state of the vehicle may preferably be determined based on a result of comparison between deceleration of the vehicle and the predetermined deceleration, and
the control means makes the determination that a temperature of the evaporator is to be controlled in an ordinary mode when the deceleration of the vehicle is less than the predetermined deceleration, and makes the determination that the temperature of the evaporator is to be controlled in a cool storage mode when the deceleration of the vehicle is the predetermined deceleration or more.

Due to such a constitution, the traveling state of the vehicle is determined based on the result of comparison between the deceleration of the vehicle and the predetermined deceleration and hence, the control means determines that the temperature of the evaporator is to be controlled in an ordinary mode when the deceleration of the vehicle is relatively small so that a possibility of the vehicle stopping is low, and the control means performs a control of setting a temperature of the evaporator relatively higher thus lowering a driving rate of the compressor whereby a vehicle fuel consumption reduction effect can be acquired. Further, the control means determines that the temperature of the evaporator is to be controlled in a cool storage mode when the deceleration of the vehicle is relatively large so that a possibility of the vehicle stopping is high, and the control means performs a control of setting the temperature of the evaporator relatively lower thus securely storing cold in the evaporator whereby an engine idling stop time can be sufficiently ensured.

The air conditioner for vehicle according to the present invention further includes: a cool storage heat exchanger which is provided downstream of the evaporator in an air flow and is capable of being cooled by air cooled by the evaporator; and a cool storage heat exchanger temperature detection means which detects a temperature of the cool storage heat exchanger, wherein the control means is capable of controlling the temperature of the cool storage heat exchanger by controlling an operation state of the compressor, and the control means, when the control means makes the determination that the temperature of the cool storage heat exchanger is to be controlled in an ordinary mode, controls the operation state of the compressor such that the temperature of the cool storage heat exchanger detected by the cool storage heat exchanger temperature detection means approaches a target temperature of the cool storage heat exchanger introduced from the ordinary mode target temperature map, and the control means, when the control means makes the determination that the control of the temperature of the cool storage heat exchanger is to be controlled in a cool storage mode, controls the operation state of the compressor such that the temperature of the cool storage heat exchanger detected by the cool storage heat exchanger temperature detection means approaches a target temperature of the cool storage heat exchanger introduced from the cool storage mode target temperature map.

Due to such a constitution, the control means may control the compressor such that the temperature of the cool storage heat exchanger provided downstream of the evaporator approaches the target temperature set based on the target temperature map in place of controlling the compressor such that the detected temperature of the evaporator approaches the target temperature set based on the target temperature map. Accordingly, the degree of freedom in designing the air conditioner for vehicle can be increased.

The air conditioner for vehicle described above is mounted on any vehicle. Accordingly, the present invention can also provide the vehicle which can ensure a fuel consumption reduction effect, sufficient cooling ability and a sufficient engine idling stop time.

As described above, according to the present invention, whether the temperature of the evaporator is to be controlled in an ordinary mode or in a cool storage mode is determined based on a traveling state of the vehicle. Accordingly, a cool storage mode which exhibits a high compressor driving rate is not adopted when a possibility of the vehicle stopping is low and hence, a vehicle fuel consumption reduction effect can be surely acquired. Further, according to the present invention, the temperature of the evaporator can be controlled corresponding to a heat load in both the ordinary mode and the cool storage mode and hence, the operation of the refrigerating cycle which reflects a vehicle traveling state and a state of the heat load can be realized thus ensuring a sufficient cooling ability and a sufficient engine idling stop time.

According to the present invention, in the range where the heat load is the first predetermined value or more, the target temperature of the evaporator set in a cool storage mode target temperature map is set lower than the target temperature of the evaporator set in an ordinary mode target temperature map and hence, when it is determined that the temperature of the evaporator is to be controlled in a cool storage mode in a state where the heat load is large, cold can be securely stored in the evaporator so that the engine idling stop time can be sufficiently ensured.

According to the present invention, within a range where the heat load is smaller than the first predetermined value, the target temperature of the evaporator set in a cool storage mode target temperature map is set lower than the target temperature of the evaporator set in an ordinary mode target temperature map, and the temperature difference in the target temperature of the evaporator between two modes is set relatively smaller than the temperature difference within a range where the heat load is larger than the first predetermined value. Accordingly, when it is determined that the temperature of the evaporator is to be controlled in a cool storage mode in a state where the heat load is not so large, a calorific value of cold is small even though cold is stored in the evaporator and hence, the excessive driving of the compressor can be prevented whereby a vehicle fuel consumption reduction effect can be acquired. Further, the heat load is not so large and hence, it is possible to sufficiently ensure the engine idling stop time.

According to the present invention, in the range where the heat load is even smaller than the second predetermined value which is the value smaller than the first predetermined value, there is no temperature difference between the target temperature of the evaporator set in an ordinary mode target temperature map and the target temperature of the evaporator set in a cool storage mode target temperature map. Accordingly, even when it is determined that the temperature of the evaporator is to be controlled in a cool storage mode in a state where the heat load is relatively small, the cool storage amount of the evaporator in a cool storage mode is substantially equal to the cool storage amount of the evaporator in an ordinary mode and hence, the calorific value is extremely small. Accordingly, a vehicle fuel consumption reduction effect can be acquired by preventing excessive driving of the compressor even more reliably, and an engine idling stop time can be sufficiently ensured since the heat load is relatively small.

Further, according to the present invention, in performing the dehumidification heating in a cold period, a temperature of the evaporator is controlled from a viewpoint of the prevention of fogging of a window pane rather than from a viewpoint of cooling the inside of a cabin so that the reliable dehumidification is required both in an ordinary mode and in a cool storage mode. Since there is no difference between target temperatures of the evaporator set in the target temperature maps, there is no difference in dehumidifying amount between the ordinary mode and the cool storage mode whereby fogging up prevention capability can be kept unchanged even when the operation mode is changed.

According to the present invention, the target temperature of the evaporator when the heat load is relatively low is set higher than the target temperature of the evaporator when the heat load is relatively high. Accordingly, the controlled temperature of the evaporator is set higher when the heat load is reduced so that a driving rate of the compressor is lowered whereby a vehicle fuel consumption reduction effect can be acquired, while the controlled temperature of the evaporator is set lower when the heat load is increased so that a cool storage amount of the evaporator is increased whereby an engine idling stop time can be sufficiently ensured.

According to the present invention, an operation and a time necessary for storing cold in the evaporator become unnecessary in an ordinary mode and hence, a driving rate of the compressor can be lowered whereby a vehicle fuel consumption reduction effect can be acquired more reliably.

According to the present invention, cold can be securely stored in the evaporator in a cool storage mode and hence, an engine idling stop time can be ensured.

According to the present invention, by setting the heat load of the vehicle as the air conditioning comprehensive signal, a temperature control of the evaporator corresponding to an operation demand ability which the refrigerating cycle is required to satisfy can be performed and hence, the ordinary mode and the cool storage mode can be switched more properly.

According to the present invention, by using the outside air temperature of the vehicle as the heat load, the ordinary mode and the cool storage mode can be switched without using any complicated control.

According to the present invention, the traveling state of the vehicle is determined based on the result of comparison between the speed of the vehicle and the predetermined speed and hence, the control means determines that the temperature of the evaporator is to be controlled in an ordinary mode when a speed of the vehicle is relatively fast so that a possibility of the vehicle stopping is low, and the control means performs a control of setting a temperature of the evaporator relatively higher thus lowering a driving rate of the compressor whereby a vehicle fuel consumption reduction effect can be acquired. Further, the control means determines that the temperature of the evaporator is to be controlled in a cool storage mode when a speed of the vehicle is relatively slow so that a possibility of the vehicle stopping is high, and the control means performs a control of setting the temperature of the evaporator relatively lower thus securely storing cold in the evaporator whereby an engine idling stop time can be sufficiently ensured.

According to the present invention, the traveling state of the vehicle is determined based on the result of comparison between the deceleration of the vehicle and the predetermined deceleration and hence, the control means determines that the temperature of the evaporator is to be controlled in an ordinary mode when the deceleration of the vehicle is relatively small so that a possibility of the vehicle stopping is low, and the control means performs a control of setting a temperature of the evaporator relatively higher thus lowering a driving rate of the compressor whereby a vehicle fuel consumption reduction effect can be acquired. Further, the control means determines that the temperature of the evaporator is to be controlled in a cool storage mode when the deceleration of the vehicle is relatively large so that a possibility of the vehicle stopping is high, and the control means performs a control of setting the temperature of the evaporator relatively lower thus securely storing cold in the evaporator whereby an engine idling stop time can be sufficiently ensured.

According to the present invention, the control means may control the compressor such that the temperature of the cool storage heat exchanger provided downstream of the evaporator approaches the target temperature set based on the target temperature map in place of controlling the compressor such that the detected temperature of the evaporator approaches the target temperature set based on the target temperature map. Accordingly, the degree of freedom in designing the air conditioner for vehicle can be increased.

According to the present invention, it is possible to provide the vehicle which can ensure a fuel consumption reduction effect, sufficient cooling ability and a sufficient engine idling stop time.

### BRIEF DESCRIPTION OF THE DRAWINGS

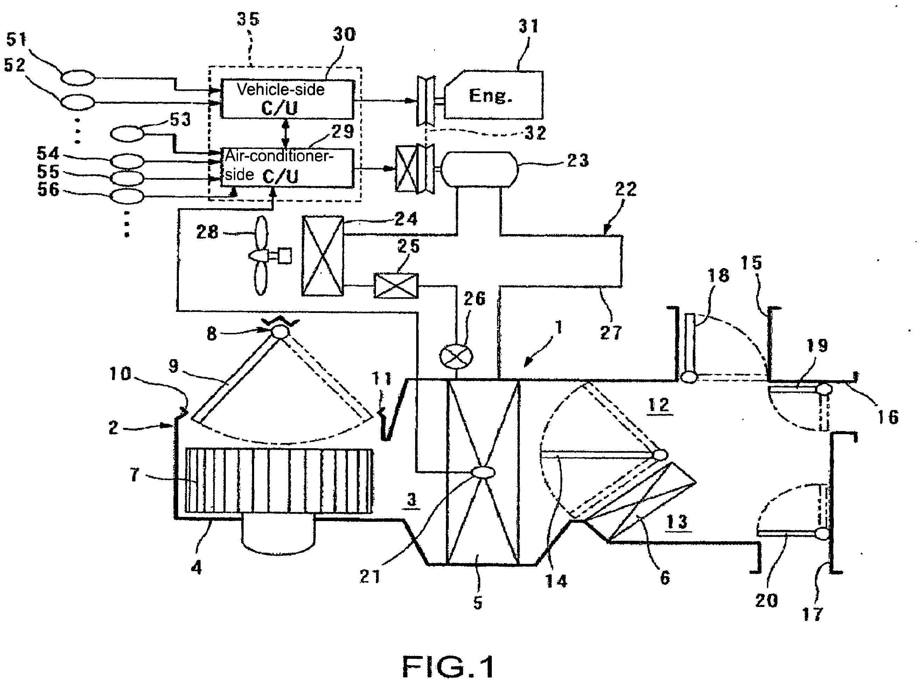

Fig. 1 is an explanatory view showing an air conditioner for vehicle which uses an evaporator having a cool storage agent according to an embodiment 1 of the present invention in a refrigerating cycle and an engine;

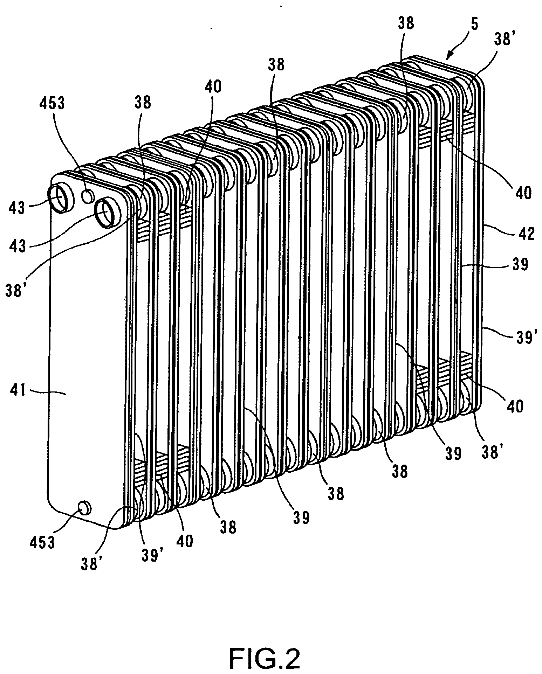

Fig. 2 is a perspective view showing one example of the overall constitution of the evaporator having the cool storage agent which is used in the above-mentioned refrigerating cycle;

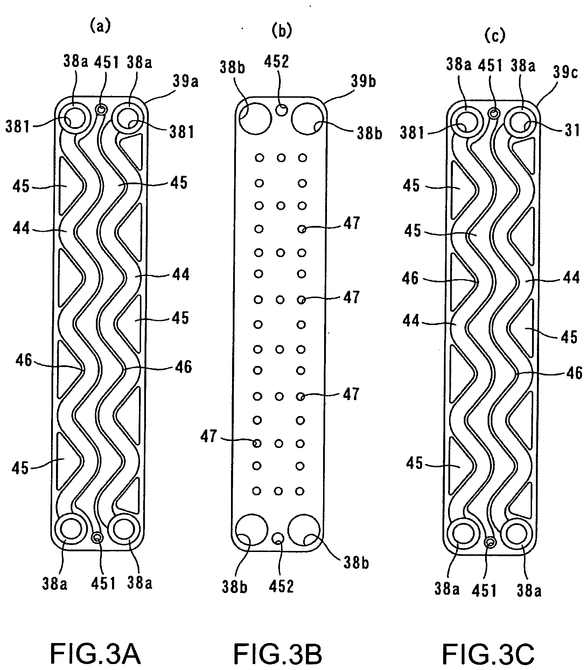

Fig. 3A to Fig. 3C are explanatory views of formed plates which constitute the evaporator shown in Fig. 2, wherein Fig. 3A and Fig. 3C show the formed plates having portions where the cool storage agent is stored, and Fig. 3B shows the formed plate having an approximately flat shape which is sandwiched between the formed plate shown in Fig. 3A and the formed plate shown in Fig. 3C;

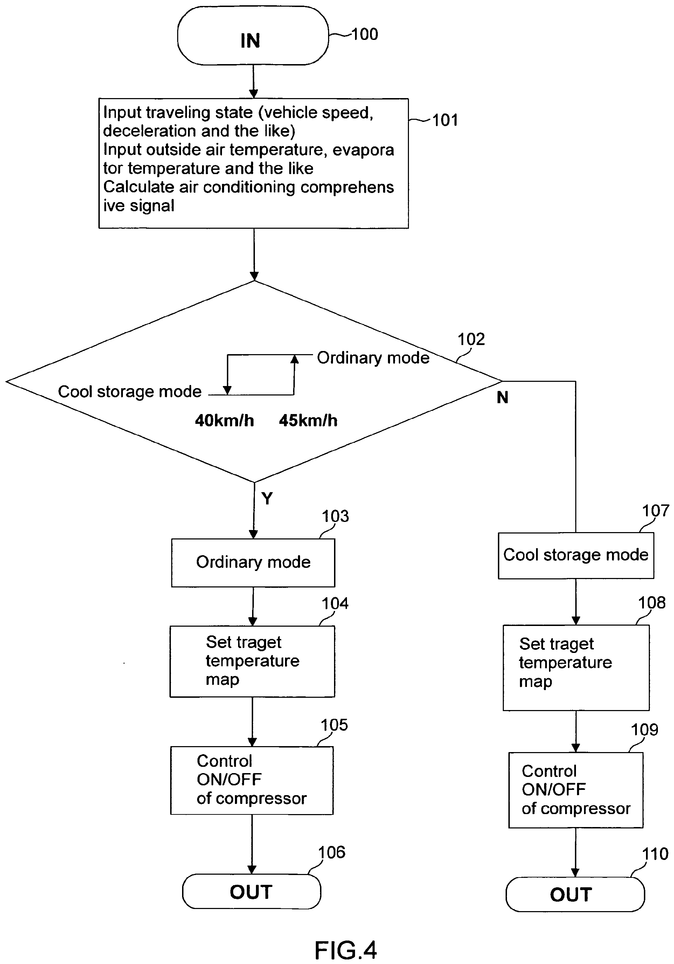

Fig. 4 is a flowchart showing the flow of an ON/OFF control of a compressor where, as a first example of the embodiment 1 of the present invention, whether a temperature of the evaporator is to be controlled in an ordinary mode or in a cool storage mode is determined based on a traveling state, and suitable target temperature maps are set in respective modes, and an ON/OFF control of the compressor is performed such that a temperature of the evaporator detected by an evaporator temperature detection means approaches the target temperature maps;

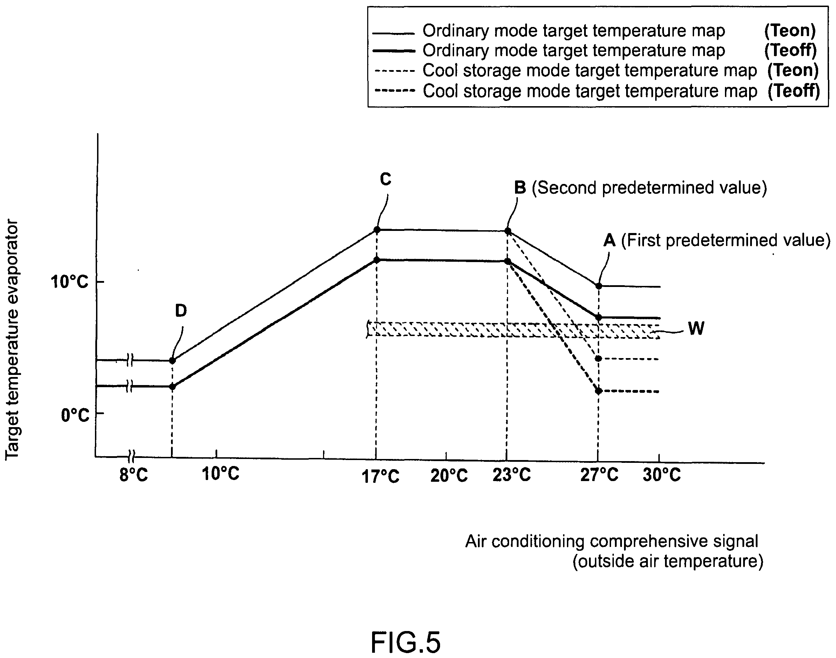

Fig. 5 is an explanatory view showing ordinary mode target temperature maps and cool storage mode target temperature maps used in the first example of the above-mentioned embodiment 1, wherein a reference value A (outside air temperature of 27°C, for example) is a first predetermined value of a heat load, the target temperatures have the first temperature difference in a region where the heat load is larger than the reference value A and have the second temperature difference which is smaller than the first temperature difference in a region where the heat load is smaller than the reference value A, a reference value B (outside air temperature of 23°C, for example) is a second predetermined value of the heat load, and the target temperatures have no second temperature difference in a region where the heat load is smaller than the reference value B;

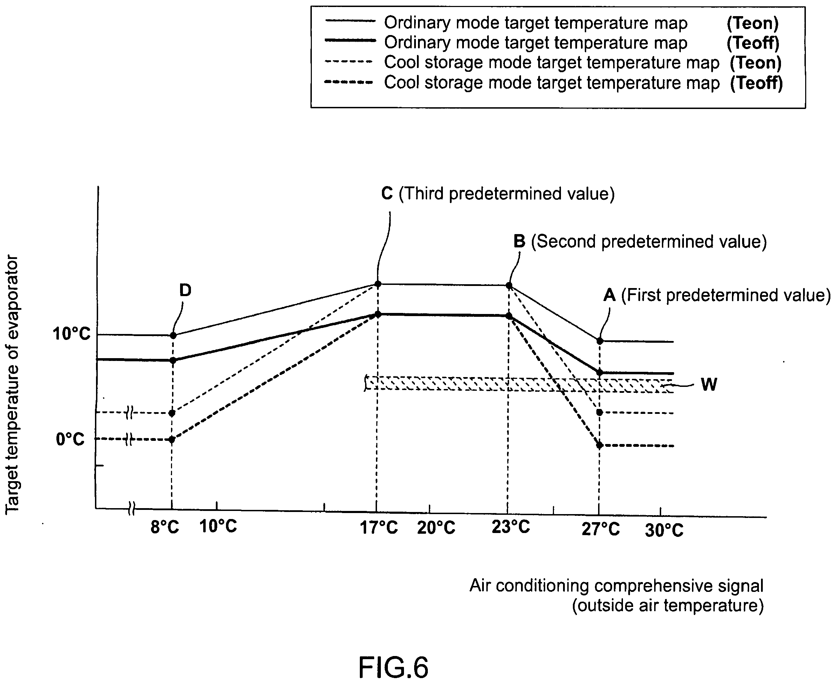

Fig. 6 is an explanatory view showing ordinary mode target temperature maps and cool storage mode target temperature maps used in the second example of the above-mentioned embodiment 1 which is a modification of the example shown in Fig. 5, wherein a reference value A (outside air temperature of 27°C, for example) is a first predetermined value of a heat load, a reference value B (outside air temperature of 23°C, for example) is a second predetermined value of the heat load, and a reference value C (outside air temperature of 17°C, for example) is a third predetermined value of the heat load, and the temperature difference is equal to the temperature difference shown in Fig. 5 in a region where the heat load is larger than the reference value C, and there is a difference in the second temperature difference in a region where the heat load is smaller than the reference value C;

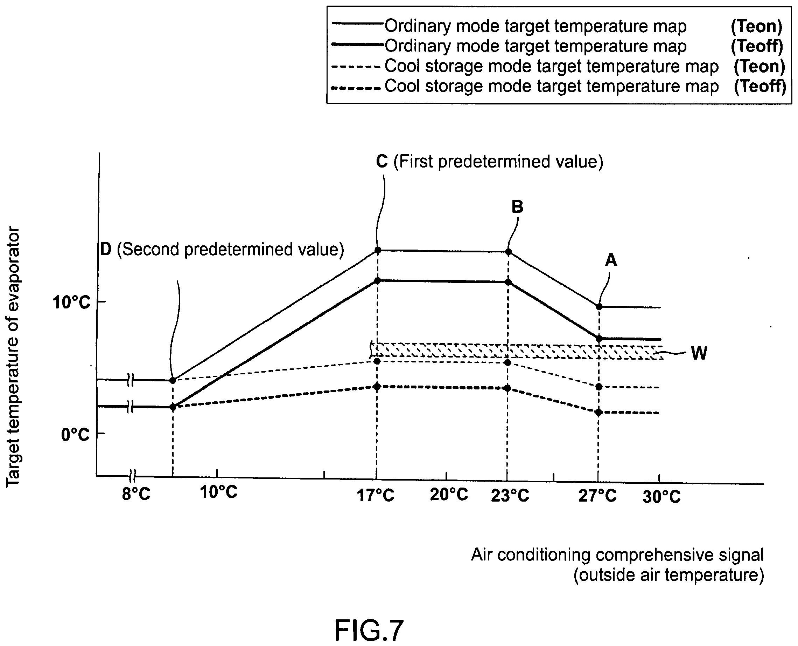

Fig. 7 is an explanatory view showing ordinary mode target temperature maps and cool storage mode target temperature maps used in the third example of the above-mentioned embodiment 1 which is a modification of the example shown in Fig. 5 or Fig. 6, wherein a reference value C (outside air temperature of 17°C, for example) is a first predetermined value of a heat load, the target temperatures have the first temperature difference in a region where the heat load is within a range between the reference value C and a reference value B (outside air temperature of 23°C, for example),and have the second temperature difference smaller than the first temperature difference in a region where the heat load is smaller than the reference value C, a reference value D (outside air temperature of 8°C, for example) is a second predetermined value of the heat load, and there is no second temperature difference in a region where the heat load is smaller than the reference value D; and

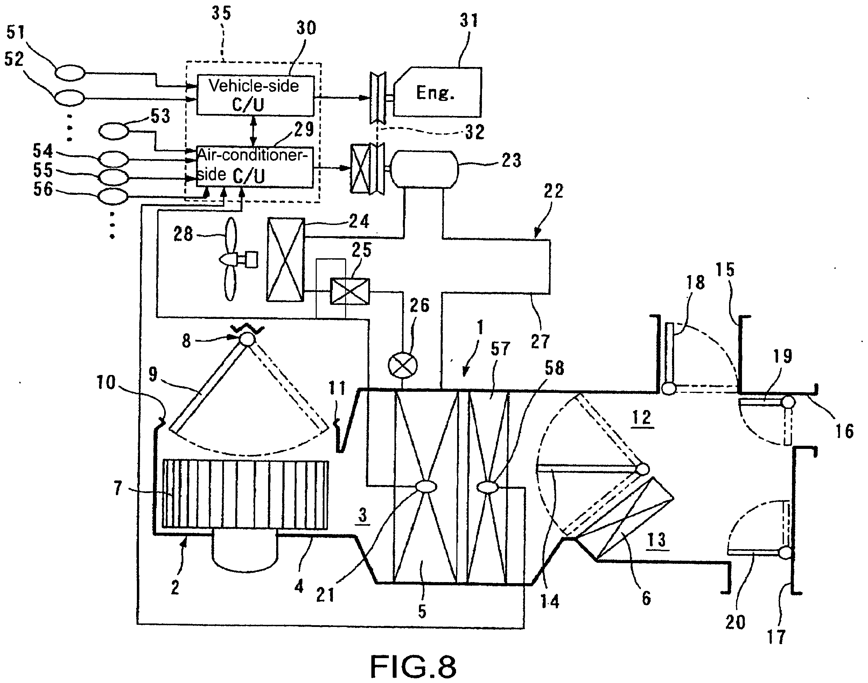

Fig. 8 is an explanatory view showing an embodiment 2 of the present invention, wherein in place of using the evaporator having a cool storage agent shown in Fig. 1, an evaporator without a cool storage agent and a cool storage heat exchanger having a cool storage agent are used and, further, a cool storage heat exchanger temperature detection means is used.

### DETAILED DESCRIPTION OF THE INVENTION

Hereinafter, embodiments of the present invention are explained in conjunction with attached drawings.

### [Embodiment 1]

In Fig. 1, one example of an air conditioner for vehicle 1 according to the present invention is shown as an embodiment 1. The air conditioner for vehicle 1 shown in Fig. 1 includes an HVAC UNIT 2, a refrigerating cycle 22, and an air-conditioner side control unit 29 which controls the air conditioner. The air-conditioner side control unit 29 forms a control means 35 together with a vehicle-side control unit 30.

The HVAC UNIT 2 is arranged more on a cabin room side than a fire board (not shown in the drawing) which partitions an engine room and a cabin room of the vehicle. As shown in Fig. 1, in a casing 4 in which an air flow passage 3 is formed, an evaporator 5 which is a heat exchanger for cooling and constitutes a part of a refrigerating cycle 22 described later, and a heater 6 which is a heat exchanger for heating and uses cooling water for an engine 31 described later, for example, as a heat source are housed. Also a blower 7 is arranged upstream of the evaporator 5 in the air flow passage 3.

An intake device 8 is arranged further upstream of the blower 7, that is, on the most upstream side of the air flow passage 3 as shown in Fig. 1. The intake device 8 is configured such that, when the blower 7 is rotated, inside air or outside air is introduced from an inside air introducing port 10 and/or an outside air introducing port 11 corresponding to a position (opening) of an intake door 9. The intake door 9 is driven by an actuator not shown in the drawing, and the blower 7 is driven by a motor.

As shown in Fig. 1, in the inside of the casing 4, as shown in Fig. 1, a cold air flow passage 12 which guides air cooled after passing through the evaporator 5 to a downstream side of the air flow passage 3 in such a manner that air bypasses the heater 6, and a hot air flow passage 13 which guides air passing through the heater 6 to a downstream side of the air flow passage 3 are formed as sections of the air flow passage 3. Further, a ratio between air which passes through the cold air flow passage 12 and air which passes through the hot air flow passage 13 is adjusted according to the degree an air mixing door 14 opens as shown in Fig. 1. Air which flows from the cold air flow passage 12 and air which flows from hot air flow passage 13 are suitably mixed together at a position downstream of the air mixing door 14 and the heater 6 in the air flow passage 3, and is suitably blown into a cabin interior space through a defrosting air outlet 15, a vent air outlet 16 and a foot air outlet 17. In this embodiment 1, these air outlets 15, 16, 17 are appropriately selected according to the rotation of blowout mode switching doors 18, 19, 20 which are arranged at positions very close to openings of these air outlets. The respective doors 14, 18, 19, 20 are driven by actuators not shown in the drawing.

In this embodiment, as shown in Fig. 1, an evaporator temperature detection means 21 which detects an evaporator temperature by measuring a surface temperature of the evaporator 5 is arranged on a surface of the evaporator 5. In place of the evaporator temperature detection means 21 which is arranged on the surface of the evaporator 5, an evaporator temperature detection means 21 which detects an evaporator temperature by measuring an air temperature at an outlet side of the evaporator 5 may be arranged at the outlet side of the evaporator 5 downstream of the evaporator 5 in the air flow passage even though the evaporator temperature detection means 21 is not shown in the drawing. The evaporator temperature detection means 21 itself is a known device such as a thermostat or other temperature sensors and hence, the explanation of the constitution of the evaporator temperature detection means 21 is omitted. The evaporator temperature detection means 21 shown in Fig. 8 may be arranged substantially in the same manner as the evaporator temperature detection means 21 in Fig. 1, and may have the substantially same constitution as the evaporator temperature detection means 21 in Fig. 1.

As shown in Fig. 1, the refrigerating cycle 22 is constituted by suitably joining a compressor 23, a condenser 24, a gas-liquid separator 25, a decompression and expansion device 26, and the evaporator 5 to each other using a pipe 27.

The compressor 23 sucks in a refrigerant, compressing the refrigerant and, thereafter, discharges the refrigerant. In this embodiment, a compressor having a fixed discharging capacity which is referred to as a fixed-capacity-type compressor is used as the compressor 23. Power of the engine 3 is transmitted to the compressor 23 by way of a transmission device 32 such as a V belt. A high-temperature and high-pressure refrigerant which is discharged from the compressor 23 flows into the condenser 4 and is condensed by being subjected to a heat exchange with outside air blown by a cooling fan 28. The refrigerant condensed by the condenser 24 flows into the gas-liquid separator 25 where the refrigerant is separated into gas and liquid, and a surplus refrigerant in the refrigerating cycle 22 is accumulated in the gas-liquid separator 25. A liquid refrigerant supplied to the decompression and expansion device 26 from the gas-liquid separator 25 is decompressed in the decompression and expansion device 26 so that the liquid refrigerant is formed into a low-pressure gas-liquid two-phase state. Then, the low-pressure refrigerant discharged from the decompression and expansion device 26 flows into the evaporator 5, and is evaporated by absorbing heat from air which flows in the air flow passage 3 and, thereafter, is returned to the compressor 23.

In the embodiment 1, the evaporator 5 having a cool storage function as shown in Fig. 2 and Fig. 3 is used. The evaporator 5 is basically a laminated heat exchanger which is constituted by laminating a plurality of tubes 39 each of which arranges a pair of tanks 38, 38 on both longitudinal sides thereof respectively to each other in a state where corrugated fins 40 are interposed between the neighboring tubes 39. A tube 39' having a side plate 41 and a tube 39' having a side plate 42 are arranged on both ends in the laminating direction of the tubes 39 respectively.

The tube 39 is configured such that refrigerant passages which make the tanks 38 on one end side of the tube 39 in the longitudinal direction and the tanks 38 on the other end side of the tube 39 in the longitudinal direction communicate with each other are formed in the tube 39. For example, the tube 39 is constituted by putting together a formed plate 39a shown in Fig. 3A, a formed plate 39b shown in Fig. 3B, and a formed plate 39c shown in Fig. 3C.

The formed plate 39a and the formed plate 39c have a pair of tank forming bulging portions 38a, 38a for forming the tanks 38, 38 of the tube 39 on both sides in the longitudinal direction of the formed plate 39a, 39c, and two refrigerant flow passage forming bulging portions 44 for forming the refrigerant flow passages of the tube 39 are formed on the formed plate 39a and the formed plate 39c respectively in a corrugated shape. Both ends of the refrigerant flow passage forming bulging portion 44 are continuously formed with the tank forming bulging portions 38a. Further, through holes 381 for making the tanks 38 of the tube 39 communicate with the tanks 38 of another neighboring tube 39 are formed in respective tank forming bulging portions 38a.

Further, on the formed plate 39a and the formed plate 39c, a cool-storage-agent holding portion forming bulging portions 45 is formed between the refrigerant passage forming bulging portions 44, 44 as well as between each refrigerant passage forming bulging portion 44 and each side edge of the formed plate 39a and the formed plate 39c. The cool-storage-agent holding portion forming bulging portion 45 and the refrigerant passage forming bulging portion 44 are clearly partitioned by a partition wall 46. Further, in this embodiment, a supply hole 451 for supplying a cool storage agent is formed in both sides of the cool-storage-agent holding portion forming bulging portion 45 positioned between two refrigerant passage forming bulging portions 44, 44 in the longitudinal direction.

The formed plate 39b is interposed between the formed plate 39a and the formed plate 39c, and has communication holes 38b, 38b for forming the tanks 38, 38 on both sides in the longitudinal direction of the formed plate 39b. A plurality of communication holes 47 for making the cool-storage-agent holding portion forming bulging portions 45 of the formed plate 39a and the cool-storage-agent holding portion forming bulging portions 45 of the formed plate 39c communicate with each other are formed in the formed plate 39b. A communication hole 452 is formed in the formed plate 39b at positions corresponding to the supply holes 451 formed in the formed plates 39a, 39c.

Due to such a constitution, when the formed plate 39a and the formed plate 39c are assembled to each other with the formed plate 39b interposed therebetween, cool storage agent holding portions are arranged in the tube 39 in addition to the refrigerant flow passages. With respect to the cool-storage-agent holding portion forming bulging portions 45, the cool-storage-agent holding portion forming bulging portions 45 formed between the refrigerant passage forming bulging portions 44, 44 on the formed plate 39a, 39c respectively and the cool-storage-agent holding portion forming bulging portions 45 formed on the formed plate 39a, 39c between the refrigerant passage forming bulging portions 44 and the side edges are communicated with each other by way of communication holes 47 of the formed plate 39b and are also communicated also with the supply holes 451.

Outlet/inlet ports 43, 43 which are connected with outlet/inlet pipes not shown in the drawing are formed on the side plate 41. The side plate 41 is assembled to the formed plate 39c with the formed plate 39b interposed therebetween. The side plate 42 is assembled to the formed plate 39a with the formed plate 39b interposed therebetween. Due to such a constitution, tubes 39', 39' each of which is formed of tanks 38', a refrigerant flow passage which makes tanks 38' communicate with each other and a cool storage holding portions arranged in the vicinity of the refrigerant flow passage are formed. Further, supply holes 453 for supplying a cool storage agent are formed in the side plate 41 at positions corresponding to supply holes 451 formed in the formed plates 39a, 39c and communication holes 452 formed in the formed plate 39b.

The evaporator 5 having a cool storage function is constituted as follows. The plurality of tubes 39 are suitably laminated to each other with the corrugated fins 40 interposed therebetween. The tubes 39', 39' are laminated to both sides of the tube laminated body with the corrugated fins 40 interposed therebetween. The laminated tubes 39 and tubes 39' are joined to each other by blazing and, thereafter, a cool storage agent which can store cold therein or discharge cold therefrom by changing a phase thereof within a predetermined temperature range is supplied to the cool storage agent holding portions through the supply holes 453, and the supply holes 453 are suitably sealed.

The vehicle-side control unit 30 is a control device for performing a comprehensive control of the engine 31. Although not shown in the drawing, the vehicle-side control unit 30 is constituted of an input/output device, a memory device and a central processing unit. To an input side of the vehicle-side control unit 30, a vehicle-speed detection means 51 such as a vehicle speed sensor which detects a vehicle speed, an accelerator open/close state detection means 52 which detects an accelerator open/close state, and various detection means not shown in the drawing are electrically connected. An air-conditioner side control unit 29 described later is also electrically connected to the input side of the vehicle-side control unit 30. Detection information from the detection means 51, 52 and the like, a request signal from the air-conditioner side control unit 29 and the like are suitably inputted to the vehicle-side control unit 30. Further, the engine 31 and an air-conditioner-side control unit 29 are electrically connected to an output side of the vehicle-side control unit 30.

Due to such a constitution, when detection information is inputted to the vehicle-side control unit 30 from the various detection means, the vehicle-side control unit 30 calculates a traveling state of the vehicle and an operation state of the engine 31 based on the detection information, and transmits a calculation result to the air-conditioner-side control unit 29 as an output signal.

The air-conditioner-side control unit 29 is a control device for performing a comprehensive control of the air conditioner for vehicle 1. In the same manner as the vehicle-side control unit 30, the air-conditioner-side control unit 29 includes an input/output device, a memory device and a central processing unit. To an input side of the air-conditioner-side control unit 29, the vehicle-side control unit 30, an air conditioner console portion 53 which includes various switches for performing turning on/off of the air conditioner, switching of an inside air/outside air introducing mode, switching of an air-blowout mode, setting of a target value of a cabin temperature and the like, a solar radiation detection means 54 such as a solar radiation sensor which detects a solar radiation, an outside air temperature detection means 55 such as an outside air temperature sensor which detects an outside air temperature, a cabin temperature detection means 56 which detects a cabin temperature of the vehicle, the evaporator temperature detection means 21 such as a temperature sensor which detects an evaporator temperature and the like are electrically connected. Due to such a constitution, detection information from the various detection means such as an outside air temperature, a solar radiation and an evaporator temperature, set information such as a set temperature of the air-conditioner console portion 53, a traveling state of the vehicle, an operation state of the engine 31 and the like are inputted to the air-conditioner-side control unit 29.

An output side of the air-conditioner-side control unit 29 is electrically connected with the compressor 23, a motor of the blower 7, an actuator (not shown in the drawing) of the intake door 9, an actuator (not shown in the drawing) of the air mixing door 14, and actuators (not shown in the drawing) of the blowout mode switching doors 18 to 20. The output side of the air-conditioner-side control unit 29 is also electrically connected with the vehicle-side control unit 30.

Due to such a constitution, the air-conditioner-side control unit 29 calculates an air-conditioning comprehensive signal based on set information from the air conditioner console portion 53, detection information from the outside air temperature detection means 55, a traveling state or a stop state of the vehicle, and an operation state of the engine 31. Based on a calculation result, the air-conditioner-side control unit 29 outputs a heat load acquired as an air-conditioning comprehensive signal to the compressor 23, the motor of the blower 7 and the like. The air-conditioner-side control unit 29 turns on or off the driving of the compressor 23 corresponding to the heat load acquired as an air-conditioning comprehensive signal or transmits an operation request signal which requests an operation of the engine 31 to the vehicle-side control unit 30.

In turning on or off the driving of the compressor 23, the air-conditioner side control unit 29 performs a control of intermittently turning on or off the compressor 23 for preventing freezing of the evaporator 5 in a state where the driving of the compressor 23 is held in an ON state in principle. That is, the air-conditioner side control unit 29 performs the ON/OFF control of the compressor 23 for preventing freezing of the evaporator 5 as indicated by characteristic lines shown in Fig. 5 and Fig. 8. The air-conditioner side control unit 29 turns off the driving of the compressor 23 when a temperature of the evaporator detected by the evaporator temperature detection means 21 becomes a compressor stop temperature Teoff or below. When a temperature of the evaporator detected by the evaporator temperature detection means 21 is elevated as a result of turning off the compressor 23 and becomes a compressor stop temperature Teoff or above, the air-conditioner side control unit 29 determines that there is no possibility of freezing of the evaporator 5 and turns on the driving of the compressor 23.

Further, In performing a temperature control of the evaporator, the air-conditioner side control unit 29 can switch a control mode between an ordinary mode where the driving of the evaporator 23 is controlled such that a temperature of the evaporator 5 detected by the evaporator temperature detection means 21 becomes relatively high, and a cool storage mode where the driving of the compressor 23 is controlled such that the temperature of the evaporator 5 detected by the evaporator temperature detection means 21 becomes equal to or below a temperature controlled in an ordinary mode.

The drive control of the compressor 23 in an ordinary mode and the drive control of the compressor 23 in a cool storage mode both of which are performed by the air-conditioner side control unit 29 are explained in conjunction with a flowchart shown in Fig. 4.

The processing enters step 100 from a main routine. In step 101, an outside air temperature, a cabin temperature, an air conditioning set temperature which is set by an occupant of the vehicle, and a solar radiation amount are inputted to the air-conditioner side control unit 29 so that the air-conditioner side control unit 29 calculates an air-conditioning comprehensive signal based on these input data. Information such as a traveling state obtained based on a vehicle speed, deceleration and the like (for example, whether or not a vehicle speed is 40km/h or more, and for example, whether or not deceleration is 3.0m^2/sec or more), a temperature of the evaporator 5 and the like is also inputted to the air-conditioner side control unit 29. Next, in step 102, it is determined whether a temperature of the evaporator 5 is to be controlled in an ordinary mode or in a cool storage mode based on a traveling state of the vehicle such as whether or not a possibility that the vehicle is stopped is high. As a more specific example of this embodiment, in step 102, it is determined that a temperature of the evaporator 5 is to be controlled in an ordinary mode when a vehicle speed inputted in step 101 exceeds a first vehicle speed (for example, 45km/h), it is determined that a temperature of the evaporator 5 is to be controlled in a cool storage mode when a vehicle speed inputted in step 101 is less than a second vehicle speed (for example, 40km/h) which is lower than the first vehicle speed, and an ordinary mode or a cool storage mode which has been used is maintained when a value of the inputted vehicle speed falls within a range of not less than the second vehicle speed and not more than the first vehicle speed. By setting such a hysteresis width, it is possible to prevent the excessive number of switching of the operation mode between an ordinary mode and a cool storage mode thus enabling a stable control. When a possibility that the vehicle is stopped is small so that it is determined that a temperature of the evaporator is to be controlled in an ordinary mode, the processing advances to the ordinary mode in step 103. In step 104, the use of the ordinary mode target temperature map is set out of target temperature maps for the evaporator described later. In step 105, a temperature of the evaporator 5 is controlled by controlling the turning on or off of the driving of the compressor based on the ordinary mode target temperature map. Thereafter, the processing advances to step 106 and returns to the main routine. On the other hand, in step 102, when a possibility that the vehicle is stopped is high so that it is determined that a temperature of the evaporator is to be controlled in a cool storage mode, the processing advances to the cool storage mode in step 107. In step 108, the use of the cool storage mode target temperature map is set out of the target temperature maps for the evaporator described later. In step 109, a temperature of the evaporator 5 is controlled by controlling the turning on or off of the driving of the compressor based on the cool storage mode target temperature map. Thereafter, the processing advances to step 110 and returns to the main routine.

In this manner, in the control of a temperature of the evaporator 5 based on driving of the compressor 23, it is determined whether the control of a temperature of the evaporator 5 is to be performed in an ordinary mode or in a cool storage mode based on a traveling state of the vehicle. Accordingly, when a possibility that the vehicle is stopped is low, it is possible to prevent the temperature control mode from assuming a cool storage mode where a control temperature of the evaporator is relatively low and a driving rate of the compressor 23 is high, and when a possibility that the vehicle is stopped is high, the temperature control mode is brought into a cool storage mode where a driving rate of the compressor 23 is high so that the air-conditioner side control unit 29 can suppress the elevation of a cabin temperature when the engine 31 is automatically stopped. That is, when the engine 31 is automatically stopped, the driving of the compressor 23 is stopped so that an operation of the refrigerating cycle 22 is stopped. On the other hand, the blower 7 is continuously operated and supplies air to the air flow passage 3. Supplied air is cooled by the evaporator 5 where cold is stored, and cooled air is blown into a cabin room so that the elevation of a cabin temperature during a time that the engine is stopped can be suppressed.

Here, the ordinary mode target temperature map and the cool storage mode target temperature map which are the target temperature maps of the evaporator set in step 104 and step 108 of the flowchart shown in Fig. 4 are set as shown in Fig. 5.

That is, to take a target temperature of the evaporator on an axis of ordinates and a heat load acquired as an air-conditioning comprehensive signal on an axis of abscissas, in the ordinary mode target temperature map, a temperature Teon which is a target temperature of the evaporator at which the driving of the compressor is turned off and a temperature Teoff which is a target temperature of the evaporator at which the driving of the compressor is turned on are set as follows.
a) The temperatures Teon, Teoff are fixed temperatures (in this embodiment, the temperature Teon is 8°C, and the temperature Teoff is 10°C) within a range where the heat load is larger than a reference value A which is a relatively large heat load (right end side in Fig. 5).
b) The temperatures Teon, Teoff are gradually elevated toward a reference value B which is a heat load smaller than the reference value A.
c) The temperatures Teon, Teoff are set to fixed temperatures (in this embodiment, the temperature Teon is 11 °C, and the temperature Teoff is 13°C) within a range between the reference value B and a reference value C which is a heat load smaller than the reference value B.
d) The temperatures Teon, Teoff are gradually lowered toward a reference value D which is a heat load smaller than the reference value C.
e) The temperatures Teon, Teoff are set to fixed temperatures (in this embodiment, the temperature Teon is 1°C, and the temperature Teoff is 3°C) within a range where a heat load is smaller than the reference value D (left end side in Fig. 5).

Further, in the cool storage mode target temperature map, the temperatures Teon, Teoff are set as follows.
a) The temperatures Teon, Teoff are set to fixed temperatures within a range where a heat load is larger than the reference value A (right end side in Fig. 5), and the temperature Teoff in a cool storage mode target temperature map is lower than the temperature Teon in an ordinary mode target temperature map (in this embodiment, the temperature Teon is 1°C, and the temperature Teoff is 3°C),
b) The temperatures Teon, Teoff are gradually elevated toward the reference value B which is a heat load smaller than the reference value A.
c) The temperatures Teon, Teoff within a range where a heat load is smaller than the reference value B (left end side of the reference value B in Fig. 5) agree with the temperatures Teon, Teoff in an ordinary mode target temperature map.

Within a range where a heat load is larger than the reference value A, the temperatures Teon, Teoff in an ordinary mode are set higher than a temperature range W where a cool storage agent accumulated in the evaporator 5 changes a phase thereof (in this embodiment 5°C to 6°C), and the temperatures Teon, Teoff in a cool storage mode are set lower than the temperature range W where a cool storage agent accumulated in the evaporator 5 changes a phase thereof.

By setting such target temperature maps of the evaporator, within a range where a heat load is large (a range on a right side of the reference value A in Fig. 5) such as the summer season, for example, a temperature of the evaporator 5 is controlled in accordance with the temperatures Teon, Teoff in an ordinary mode or in accordance with the temperatures Teon, Teoff in a cool storage mode which are set lower than the temperatures Teon, Teoff in an ordinary mode.

Within a range where a heat load is relatively large (a range between the reference value A and the reference value B in Fig. 5), for example, at the end of spring season or at the beginning of autumn, a temperature of the evaporator 5 is controlled in accordance with the temperatures Teon, Teoff in an ordinary mode or in accordance with the temperatures Teon, Teoff in a cool storage mode which are set lower than Teon, Teoff in an ordinary mode.

Further, for example, from a range where a heat load is relatively small in the spring season or in the most of autumn season to a range where a heat load is smallest in the winter season, (a range on a left side of the reference value B in Fig. 5), a temperature of the evaporator 5 is controlled in accordance with the temperatures Teon, Teoff in an ordinary mode or in accordance with the temperatures Teon, Teoff in a cool storage mode which are set as the same target temperatures as the target temperatures in an ordinary mode.

A temperature of the evaporator 5 is controlled so as to fall within a temperature range between the temperatures Teon and Teoff in an ordinary mode indicated by a solid line in Fig. 5 or within a temperature range between the temperatures Teon and Teoff in a cool storage mode indicated by a broken line in Fig. 5.

That is, within a range where a heat load is larger than the reference value B, the temperatures Teon, Teoff in an ordinary mode differ from the temperatures Teon, Teoff in a cool storage mode respectively and hence, under a heat load condition where a cooling demand is high, a driving rate of the compressor 23 can be lowered and a sufficient idling stop time can be ensured by storing cold in the evaporator 5. Further, within a range where a heat load is smaller than the reference value B, the temperatures Teon, Teoff in an ordinary mode and the temperatures Teon, Teoff in a cool storage mode agree with each other respectively and hence, under a heat load condition where a cooling demand is not so high, an operation rate of the compressor 23 can be lowered.

It is needless to say that the target temperature maps of the evaporator which are set in step 104 and step 108 in the flowchart shown in Fig. 4 are not limited to the maps shown in Fig. 5, and maps shown in Fig. 6 may be set as the target temperature maps.

That is, to take a target temperature of the evaporator on an axis of ordinates and a heat load acquired as an air-conditioning comprehensive signal on an axis of abscissas, in the ordinary mode target temperature map, the temperatures Teon, Teoff in an ordinary mode are set as follows.
a) The temperatures Teon, Teoff are fixed (in this embodiment, the temperature Teon is 8°C, and the temperature Teoff is 10°C) within a range where a heat load is larger than a reference value A which is a relatively large heat load (right end side in Fig. 6).
b) The temperatures Teon, Teoff are gradually elevated toward a reference value B which is smaller than the reference value A in heat load.
c) The temperatures Teon, Teoff are set to fixed temperatures within a range between the reference value B and a reference value C which is a heat load smaller than the reference value B (in this embodiment, the temperature Teon is 11 °C, and the temperature Teoff is 13°C).
d) The temperatures Teon, Teoff are gradually lowered toward a reference value D which is a heat load smaller than the reference value C, and
e) The temperatures Teon, Teoff are set to fixed temperatures (in this embodiment, the temperature Teon is 8°C, and the temperature Teoff is 10°C) within a range where a heat load is smaller than the reference value D (left end side in Fig. 6).

Further, in a cool storage mode target temperature map, within a range where a heat load is larger than the reference value C, the temperatures Teon, Teoff are set in the same manner as the temperatures Teon, Teoff in the cool storage mode target temperature map shown in Fig. 5, while within a range where a heat load is smaller than the reference value C, the temperatures Teon, Teoff are set as follows.
d) The temperatures Teon, Teoff are gradually lowered toward the reference value D which is the heat load smaller than the reference value C.
e) The temperatures Teon, Teoff are fixed within a range where a heat load is smaller than the reference value D (left end side in Fig. 6), and the temperature Teoff is set lower than the temperature Teon in an ordinary mode target temperature map (in this embodiment, the temperature Teon is 1°C, and the temperature Teoff is 3°C)

Further, within a range where a heat load is larger than the reference value A, the temperatures Teon, Teoff in an ordinary mode are set higher than a temperature range W where a cool storage agent accumulated in the evaporator 5 changes a phase thereof (in this embodiment 5°C to 6°C), and the temperatures Teon, Teoff in a cool storage mode are set lower than the temperature range W where a cool storage agent accumulated in the evaporator 5 changes a phase thereof.

By setting such target temperature maps of the evaporator, within a range where a heat load is large (a range on a right side of the reference value A in Fig. 6) such as the summer season, for example, a temperature of the evaporator 5 is controlled in accordance with the temperatures Teon, Teoff in an ordinary mode or in accordance with the temperatures Teon, Teoff in a cool storage mode which are set lower than the temperatures Teon, Teoff in an ordinary mode.

Within a range where a heat load is relatively large (a range between the reference value A and the reference value B in Fig. 6), for example, at the end of spring season or at the beginning of autumn, a temperature of the evaporator 5 is controlled in accordance with the temperatures Teon, Teoff in an ordinary mode or in accordance with the temperatures Teon, Teoff in a cool storage mode which are set lower than Teon, Teoff in an ordinary mode.

Still further, for example, within a range where a heat load is relatively small in the spring season or in the most of autumn season (a range between the reference value B and the reference value C in Fig. 6), a temperature of the evaporator 5 is controlled in accordance with the temperatures Teon, Teoff in an ordinary mode or in accordance with the temperatures Teon, Teoff in a cool storage mode which are set as the same target temperatures as the target temperatures in an ordinary mode.

Still further, within a range where a heat load is further small, for example, at the beginning of spring season and the end of autumn season (a range between the reference value C and the reference value D in Fig. 6), a temperature of the evaporator 5 is controlled in accordance with the temperatures Teon, Teoff in an ordinary mode or in accordance with the temperatures Teon, Teoff in a cool storage mode which are set lower than the temperatures Teon, Teoff in an ordinary mode.

For example, within a range where a heat load is minimum such as the winter season (a range on a left side of the reference value D in Fig. 6), a temperature of the evaporator 5 is controlled in accordance with the temperatures Teon, Teoff in an ordinary mode or in accordance with the temperatures Teon, Teoff in a cool storage mode which are set lower than Teon, Teoff in an ordinary mode.

A temperature of the evaporator 5 is controlled so as to fall within a temperature range between the temperatures Teon, Teoff in an ordinary mode indicated by a solid line in Fig. 6 or a temperature range between the temperatures Teon, Teoff in a cool storage mode indicated by a broken line in Fig. 6.

That is, it is assumed that the temperatures Teon, Teoff in an ordinary mode and the temperatures Teon, Teoff in a cool storage mode agree with each other respectively within the range between the reference value B and the reference value C, and the temperatures Teon, Teoff are controlled at relatively high temperatures exceeding a phase change temperature of a cool storage agent. Accordingly, under a heat load condition where a cooling demand is not so high, regardless of the determination that a temperature control of the evaporator 5 is performed in an ordinary mode or in a cool storing mode, a driving rate of the compressor 23 can be lowered in the same manner. In the range where the heat load is larger than the reference value B and in the range where the heat load is smaller than the reference value D, there exists the difference between the temperatures Teon, Teoff in an ordinary mode and the temperatures Teon, Teoff in a cool storage mode respectively and hence, a driving rate of the compressor 23 can be reduced and a sufficient idling stop time can be ensured by storing cold in the evaporator 5.

Further, the target temperature maps of the evaporator which are set in step 104 and step 108 in the flowchart shown in Fig. 4 are not limited to the maps shown in Fig. 5 and Fig. 6, and maps shown in Fig. 7 may be set as the target temperature maps.

That is, to take a target temperature of the evaporator on an axis of ordinates and a heat load acquired as an air-conditioning comprehensive signal on an axis of abscissas, the temperatures Teon, Teoff in an ordinary mode in the ordinary mode target temperature map shown in Fig. 7 are set in common with the temperatures Teon, Teoff in an ordinary mode in the ordinary mode target temperature map in Fig. 5, while the temperatures Teon, Teoff in a cool storage mode in the cool storage mode target temperature map shown in Fig. 7 are set as follows.
a) The temperatures Teon, Teoff are fixed within a range where a heat load is larger than the reference value A (a right end side in Fig. 7), and the temperature Teoff is set lower than the temperature Teon in an ordinary mode target temperature map (in this embodiment, the temperature Teon is 1°C, and the temperature Teoff is 3°C),
b) The temperatures Teon, Teoff are gradually elevated toward a reference value B which is a heat load smaller than a reference value A.
c) The temperatures Teon, Teoff are fixed within a range between the reference value B and a reference value C which is a heat load smaller than the reference value B, and the temperature Teoff is set lower that the temperature Teon in an ordinary mode target temperature map (in this embodiment, the temperature Teon is 2°C, and the temperature Teoff is 4°C).
d) The temperatures Teon, Teoff are gradually lowered toward a reference value D which is a heat load smaller than the reference value C, and
e) the temperatures Teon, Teoff are fixed (in this embodiment, the temperature Teon is 1°C, and the temperature Teoff is 3°C) within a range where a heat load is smaller than the reference value D (left end side in Fig. 7), and the temperatures Teon, Teoff agree with the temperatures Teon, Teoff in an ordinary mode target temperature map.

Further, within a range where a heat load is larger than the reference value A, the temperatures Teon, Teoff in an ordinary mode are set higher than a temperature range W where a cool storage agent accumulated in the evaporator 5 changes a phase thereof (in this embodiment 5°C to 6°C), and the temperatures Teon, Teoff in a cool storage mode are set lower than the temperature range W where a cool storage agent accumulated in the evaporator 5 changes a phase thereof.

By setting such target temperature maps of the evaporator, within a range where a heat load is large (a range on a right side of the reference value A in Fig. 7) such as the summer season, for example, or within a range where heat is relatively large (a range on a right side of the reference value C in Fig. 7) such as the spring season and the autumn season, for example, a temperature of the evaporator 5 is controlled in accordance with the temperatures Teon, Teoff in an ordinary mode or in accordance with the temperatures Teon, Teoff in a cool storage mode which are set lower than the temperatures Teon, Teoff in an ordinary mode.

Further, within a range where a heat load is relatively small (a range between the reference value C and the reference value D in Fig. 7), for example, at the beginning of the spring season, at the end of the autumn season or at the beginning and the end of the winter season, a temperature of the evaporator 5 is controlled in accordance with the temperatures Teon, Teoff in an ordinary mode or in accordance with the temperatures Teon, Teoff in a cool storage mode which are set lower than Teon, Teoff in an ordinary mode.

Still further, within a range where a heat load is smallest (a range on a left side of the reference value D in Fig. 7), for example, at the winter season, a temperature of the evaporator 5 is controlled in accordance with the temperatures Teon, Teoff in an ordinary mode or in accordance with the temperatures Teon, Teoff in a cool storage mode which are set at the same target temperature as the temperatures Teon, Teoff in an ordinary mode.

A temperature of the evaporator 5 is controlled so as to fall within a temperature range between the temperatures Teon and Teoff in an ordinary mode indicated by a solid line in Fig. 7 or within a temperature range between the temperatures Teon and Teoff in a cool storage mode indicated by a broken line in Fig. 7.

That is, within a range where a heat load is larger than the reference value D, the temperatures Teon, Teoff in an ordinary mode differ from the temperatures Teon, Teoff in a cool storage mode respectively and hence, under a heat load condition where a cooling demand is high, a driving rate of the compressor 23 can be lowered and a sufficient idling stop time can be ensured by storing cold in the evaporator 5. Further, within a range where a heat load is smaller than the reference value D, the temperatures Teon, Teoff in an ordinary mode and the temperatures Teon, Teoff in a cool storage mode agree with each other respectively and hence, when dehumidification is required on heating, even if either of the modes is determined to control the temperature of the evaporator 5, dehumidification of air in a vehicle can be effected similarly.

Then, in the target temperature map of the evaporator shown in Fig. 5, Fig. 6 and Fig. 7, an outside air temperature or an air conditioning comprehensive signal obtained as a heat load corresponding to an outside air temperature may be taken on an axis of abscissas. Here, a reference value A is taken as an outside air temperature of 27°C or a heat load corresponding to the outside air temperature, for example. A reference value B is taken as an outside air temperature of 23°C or a heat load corresponding to the outside air temperature, for example. A reference value C is taken as an outside air temperature of 17°C or a heat load corresponding to the outside air temperature, for example. A reference value D is taken as an outside air temperature of 8°C or a heat load corresponding to the outside air temperature, for example.

In this manner, by setting the ordinary mode target temperature map and the cool storage mode target temperature map of the evaporator based on an outside air temperature, the ON/OFF control of the compressor can be performed in accordance with a simple logic, while by setting the ordinary mode target temperature map and the cool storage mode target temperature map of the evaporator based on an air conditioning comprehensive signal, the ON/OFF control of the compressor can be performed without being concentrated on specified detection values.

Further, a change in value of an air conditioning comprehensive signal in the target temperature map of the evaporator or a value of heat load obtained as an external air temperature has been explained in conjunction with seasons which change over the year. However, the value of the air conditioning comprehensive signal is not always limited to such values, and can be expressed as the relationship among morning, noon and night which change over the day.

### [Embodiment 2]

Fig. 8 shows another example of the air conditioner for vehicle 1 according to the present invention as the embodiment 2. Hereinafter, another example of the air conditioner for vehicle 1 is explained in conjunction with Fig. 8. However, the constitutional parts identical with the constitutional parts in the embodiment 1 explained previously are given same symbols and the explanation of these parts is omitted. Also the explanation of controls identical with the controls in the embodiment 1 explained previously are basically omitted.

In this embodiment 2, the evaporator 5 is not provided with a cool storage agent, while a cool storage heat exchanger 57 which is arranged downstream of the evaporator 5 and upstream of the air mixing door 14 in the air flow passage 3 is provided with a cool storage agent. Since the evaporator 5 and the cool storage heat exchanger 57 are arranged in this manner, the cool storage heat exchanger 57 can be cooled by air which is cooled by passing through the evaporator 5. Further, a cool storage heat exchanger temperature detection means 58 which detects a temperature of the cool storage heat exchanger by measuring a surface temperature of the cool storage heat exchanger 57 is arranged on a surface of the cool storage heat exchanger 57. An input side of the air-conditioner side control unit 29 is electrically connected to the cool storage heat exchanger temperature detection means 58, and a temperature of the cool storage heat exchanger is inputted to the air-conditioner side control unit 29 from the cool storage heat exchanger temperature detection means 58 as the detection information. Since the cool storage heat exchanger 57 per se is known, the explanation of the constitution of the cool storage heat exchanger 57 is omitted.

Due to such a constitution, in the flowchart shown in Fig. 4, in step 104, out of the target temperature maps of the cool storage heat exchanger 57, the ordinary mode target temperature map is set. In step 105, the turning on or off of the driving of the compressor is controlled based on the ordinary mode target temperature map so that a temperature of the cool storage heat exchanger 57 is controlled. In step 108, out of the target temperature maps of the cool storage heat exchanger 57, the cool storage mode target temperature map is set. In step 109, the turning on or off of the driving of the compressor is controlled based on the cool storage mode target temperature map so that a temperature of the cool storage heat exchanger 57 is controlled. The contents which are set as target temperature maps of the cool storage heat exchanger 57 are substantially equal to the contents which are set as the target temperature maps of the evaporator shown in Fig. 5, Fig. 6 and Fig. 7, and differ only with respect to a point that the target temperature of the evaporator taken along an axis of ordinates is replaced with the target temperature of the cool storage heat exchanger. Accordingly, even when the cool storage heat exchanger 57 is used, this embodiment can acquire the substantially equal or same advantageous manner of operation when the evaporator 5 provided with the cool storing agent is used.

## Claims

1. An air conditioner for vehicle (1) mounted on a vehicle which is capable of traveling by an engine (31) and has an engine automatic start and stop function capable of automatically starting and stopping the engine, the air conditioner for vehicle (1) comprising:
a refrigerating cycle (22) which is constituted by suitably joining a compressor (23) which is driven using the engine (31) as a drive source and compresses a refrigerant, a condenser (24) which condenses the compressed refrigerant, a decompression and expansion device (26) which decompresses and expands the condensed refrigerant, and an evaporator (5) which evaporates the decompressed and expanded refrigerant and has a cool storage function by piping;
an evaporator temperature detection means(21) which detects a temperature of the evaporator (5); and
a control means (35) which controls an operation state of the compressor (23), wherein
the control means (35) is capable of controlling the temperature of the evaporator (5) by controlling the operation state of the compressor (23),
the control means (35), when the control means (35) determines that the temperature of the evaporator is to be controlled in an ordinary mode, controls the operation state of the compressor (23) such that the temperature of the evaporator detected by the evaporator temperature detection means (21) approaches a target temperature of the evaporator introduced from an ordinary mode target temperature map, and
the control means (35), when the control means (35) determines that the temperature of the evaporator is to be controlled in a cool storage mode, controls the operation state of the compressor (23) such that the temperature of the evaporator detected by the evaporator temperature detection means approaches a target temperature of the evaporator introduced from a cool storage mode target temperature map, **characterised in that** the target temperature defined by the cool storage mode target temperature map and the ordinary mode target temperature map is based on the outside air temperature.

2. The air conditioner for vehicle (1) according to claim 1, wherein the ordinary mode target temperature map and the cool storage mode target temperature map are, within a range where a heat load is a first predetermined value or more, set such that the target temperature of the evaporator set in the cool storage mode target temperature map is lower than the target temperature of the evaporator set in the ordinary mode target temperature map, and
the target temperatures have a first temperature difference.

3. The air conditioner for vehicle (1) according to claim 1 or claim 2, wherein the ordinary mode target temperature map and the cool storage mode target temperature map are, within a range where a heat load is smaller than the first predetermined value, set such that the target temperature of the evaporator set in the cool storage mode target temperature map is lower than the target temperature of the evaporator set in the ordinary mode target temperature map,
the target temperatures have a second temperature difference, and
the second temperature difference is smaller than the first temperature difference.

4. The air conditioner for vehicle (1) according to claim 3, wherein the ordinary mode target temperature map and the cool storage mode target temperature map are, within a range where the heat load is further smaller than a second predetermined value which is a value smaller than the first predetermined value, set such that there is no second temperature difference.

5. The air conditioner for vehicle (1) according to any one of claims 1 to 4, wherein the ordinary mode target temperature map and the cool storage mode target temperature map are respectively set such that a second target temperature of the evaporator corresponding to a state where a heat load is the second predetermined value smaller than the first predetermined value is set higher than a first target temperature of the evaporator corresponding to a state where the heat load is the first predetermined value.

6. The air conditioner for vehicle (1) according to any one of claims 1 to 5, wherein the evaporator (5) includes a cool storage agent which changes a phase thereof within a predetermined temperature range thus capable of storing a cold or radiating heat, and
in the ordinary mode target temperature map, the target temperature of the evaporator is set such that a compressor OFF temperature at which the control means turns off the driving of the compressor (23) becomes higher than the predetermined temperature range of the cool storage agent within a range where the heat load is the first predetermined value or more.

7. The air conditioner for vehicle (1) according to any one of claims 1 to 5, wherein the evaporator(5) includes a cool storage agent which changes a phase thereof within a predetermined temperature range thus capable of storing a cold or radiating heat, and
in the cool storage mode target temperature map, the target temperature of the evaporator is set such that a compressor ON temperature at which the control means turns on the driving of the compressor(23) becomes lower than the predetermined temperature range of the cool storage agent within a range where the heat load is the first predetermined value or more.

8. The air conditioner for vehicle (1) according to any one of claims 2 to 7, wherein a heat load is an air conditioning comprehensive signal which is calculated based on at least an outside air temperature of the vehicle, an inside air temperature of the vehicle, an air conditioning set temperature set by an occupant of the vehicle, and an amount of solar radiation.

9. The air conditioner for vehicle (1) according to any one of claims 2 to 7, wherein a heat load is an outside air temperature of the vehicle.

10. The air conditioner for vehicle (1) according to any one of claims 1 to 9, wherein the traveling state of the vehicle is determined based on a result of comparison between a speed of the vehicle and a predetermined speed, and
the control means (35) determines that a temperature of the evaporator is to be controlled in an ordinary mode when the speed of the vehicle is the predetermined speed or more, and determines that the temperature of the evaporator is to be controlled in a cool storage mode when the speed of the vehicle is less than the predetermined speed.

11. The air conditioner for vehicle (1) according to any one of claims 1 to 9, wherein the traveling state of the vehicle is determined based on a result of comparison between deceleration of the vehicle and the predetermined deceleration, and
the control means (35) determines that a temperature of the evaporator is to be controlled in an ordinary mode when the deceleration of the vehicle is less than the predetermined deceleration, and determines that the temperature of the evaporator is to be controlled in a cool storage mode when the deceleration of the vehicle is the predetermined deceleration or more.

12. The air conditioner for vehicle according to any one of claims 1 to 11, further comprising:
a cool storage heat exchanger (57) which is provided downstream of the evaporator (5) in an air flow and is capable of being cooled by air cooled by the evaporator (5); and
a cool storage heat exchanger temperature detection means(58) which detects a temperature of the cool storage heat exchanger, wherein
the control means (35) is capable of controlling the temperature of the cool storage heat exchanger by controlling an operation state of the compressor (23), and
the control means (35), when the control means (35) determines that the temperature of the cool storage heat exchanger is to be controlled in an ordinary mode, controls the operation state of the compressor (23) such that the temperature of the cool storage heat exchanger detected by the cool storage heat exchanger temperature detection means (58) approaches a target temperature of the cool storage heat exchanger introduced from the ordinary mode target temperature map, and
the control means (35), when the control means (35) determines that the temperature of the cool storage heat exchanger is to be controlled in a cool storage mode, controls the operation state of the compressor (23) such that the temperature of the cool storage heat exchanger detected by the cool storage heat exchanger temperature detection means(58) approaches a target temperature of the cool storage heat exchanger introduced from the cool storage mode target temperature map.

13. A vehicle on which the air conditioner for vehicle according to any one of claims 1 to 12 is mounted.

## Patentansprüche

1. Klimaanlage für Fahrzeuge (1), die an einem Fahrzeug montiert ist, das in der Lage ist, mittels eines Motors (31) zu fahren, und eine automatische Motor-Start/Stopp-Funktion hat, die in der Lage ist, den Motor automatisch zu starten und zu stoppen, wobei die Klimaanlage für Fahrzeuge (1) Folgendes umfasst:
einen Kältekreislauf (22), der dadurch gebildet ist, dass ein Kompressor (23), der unter Verwendung des Motors (31) als Antriebsquelle angetrieben wird und ein Kältemittel komprimiert, ein Kondensator (24), der das komprimierte Kältemittel kondensiert, eine Dekompressions- und Expansionsvorrichtung (26), die das kondensierte Kältemittel dekomprimiert und expandiert, und ein Verdampfer (5), der das dekomprimierte und expandierte Kältemittel verdampft und mittels Rohrleitungen eine Kältespeicherfunktion hat, geeignet miteinander verbunden sind,
eine Verdampfertemperaturerfassungseinrichtung (21), die eine Temperatur des Verdampfers (5) erfasst, und
eine Steuereinrichtung (35), die einen Betriebszustand des Kompressors (23) steuert, wobei
die Steuereinrichtung (35) in der Lage ist, die Temperatur des Verdampfers (5) zu steuern, indem sie den Betriebszustand des Kompressors (23) steuert,
die Steuereinrichtung (35) dann, wenn die Steuereinrichtung (35) feststellt, dass die Temperatur des Verdampfers in einem Normalmodus zu steuern ist, den Betriebszustand des Kompressors (23) so steuert, dass die von der Verdampfertemperaturerfassungseinrichtung (21) erfasste Temperatur des Verdampfers sich einer aus einer Normalmodus-Solltemperaturkarte eingebrachten Solltemperatur des Verdampfers nähert, und
die Steuereinrichtung (35) dann, wenn die Steuereinrichtung (35) feststellt, dass die Temperatur des Verdampfers in einem Kältespeichermodus zu steuern ist, den Betriebszustand des Kompressors (23) so steuert, dass die von der Verdampfertemperaturerfassungseinrichtung erfasste Temperatur des Verdampfers sich einer aus einer Kältespeichermodus-Solltemperaturkarte eingebrachten Solltemperatur des Verdampfers nähert,
**dadurch gekennzeichnet, dass**
die von der Kältespeichermodus-Solltemperaturkarte und der Normalmodus-Solltemperaturkarte definierte Solltemperatur auf der Außenlufttemperatur beruht.

2. Klimaanlage für Fahrzeuge (1) nach Anspruch 1, wobei die Normal-modus-Solltemperaturkarte und die Kältespeichermodus-Solltemperaturkarte in einem Bereich, in dem eine Wärmebelastung einen ersten vorbestimmten Wert oder mehr beträgt, so festgelegt sind, dass die in der Kältespeichermodus-Solltemperaturkarte festgelegte Solltemperatur des Verdampfers niedriger als die in der Normalmodus-Solltemperaturkarte festgelegte Solltemperatur des Verdampfers ist, und
die Solltemperaturen eine erste Temperaturdifferenz aufweisen.

3. Klimaanlage für Fahrzeuge (1) nach Anspruch 1 oder Anspruch 2, wobei die Normalmodus-Solltemperaturkarte und die Kältespeichermodus-Solltemperaturkarte in einem Bereich, in dem eine Wärmebelastung unterhalb des ersten vorbestimmten Wertes liegt, so festgelegt sind, dass die in der Kältespeicher-modus-Solltemperaturkarte festgelegte Solltemperatur des Verdampfers niedriger als die in der Normalmodus-Solltemperaturkarte festgelegte Solltemperatur des Verdampfers ist,
die Solltemperaturen eine zweite Temperaturdifferenz aufweisen und
die zweite Temperaturdifferenz geringer als die erste Temperaturdifferenz ist.

4. Klimaanlage für Fahrzeuge (1) nach Anspruch 3, wobei die Normal-modus-Solltemperaturkarte und die Kältespeichermodus-Solltemperaturkarte in einem Bereich, in dem die Wärmebelastung ferner unterhalb eines zweiten vorbestimmten Wertes liegt, der ein kleinerer Wert als der erste vorbestimmte Wert ist, so festgelegt sind, dass keine zweite Temperaturdifferenz vorhanden ist.

5. Klimaanlage für Fahrzeuge (1) nach einem der Ansprüche 1 bis 4, wobei die Normalmodus-Solltemperaturkarte und die Kältespeichermodus-Solltemperaturkarte jeweils so festgelegt sind, dass eine zweite Solltemperatur des Verdampfers, die einem Zustand entspricht, in dem eine Wärmebelastung den zweiten vorbestimmten Wert beträgt, der kleiner als der erste vorbestimmte Wert ist, höher eingestellt ist als eine erste Solltemperatur des Verdampfers, die einem Zustand entspricht, in dem die Wärmebelastung den ersten vorbestimmten Wert beträgt.

6. Klimaanlage für Fahrzeuge (1) nach einem der Ansprüche 1 bis 5, wobei der Verdampfer (5) ein Kältespeichermittel aufweist, dessen Phase sich in einem vorbestimmten Temperaturbereich ändert und das somit in der Lage ist, eine Kälte zu speichern oder Wärme abzustrahlen, und
in der Normalmodus-Solltemperaturkarte die Solltemperatur des Verdampfers so festgelegt ist, dass eine Kompressor-AUS-Temperatur, bei der die Steuereinrichtung die Ansteuerung des Kompressors (23) ausschaltet, höher wird als der vorbestimmte Temperaturbereich des Kältespeichermittels in einem Bereich, in dem die Wärmebelastung den ersten vorbestimmten Wert oder mehr beträgt.

7. Klimaanlage für Fahrzeuge (1) nach einem der Ansprüche 1 bis 5, wobei der Verdampfer (5) ein Kältespeichermittel aufweist, dessen Phase sich in einem vorbestimmten Temperaturbereich ändert und das somit in der Lage ist, eine Kälte zu speichern oder Wärme abzustrahlen, und
in der Kältespeichermodus-Solltemperaturkarte die Solltemperatur des Verdampfers so festgelegt ist, dass eine Kompressor-EIN-Temperatur, bei der die Steuereinrichtung die Ansteuerung des Kompressors (23) einschaltet, niedriger wird als der vorbestimmte Temperaturbereich des Kältespeichermittels in einem Bereich, in dem die Wärmebelastung den ersten vorbestimmten Wert oder mehr beträgt.

8. Klimaanlage für Fahrzeuge (1) nach einem der Ansprüche 2 bis 7, wobei eine Wärmebelastung ein Klimatisierungsgesamtsignal ist, das anhand zumindest einer Außenlufttemperatur des Fahrzeugs, einer Innenlufttemperatur des Fahrzeugs, einer von einem Insassen des Fahrzeugs eingestellten Klimatisierungssolltemperatur und einer Menge der Sonnenstrahlung berechnet ist.

9. Klimaanlage für Fahrzeuge (1) nach einem der Ansprüche 2 bis 7, wobei eine Wärmebelastung eine Außenlufttemperatur des Fahrzeugs ist.

10. Klimaanlage für Fahrzeuge (1) nach einem der Ansprüche 1 bis 9, wobei der Fahrzustand des Fahrzeugs anhand eines Ergebnisses des Vergleichs zwischen einer Geschwindigkeit des Fahrzeugs und einer vorbestimmten Geschwindigkeit bestimmt wird und
die Steuereinrichtung (35) feststellt, dass eine Temperatur des Verdampfers dann in einem Normalmodus zu steuern ist, wenn die Geschwindigkeit des Fahrzeugs mindestens die vorbestimmte Geschwindigkeit ist, und feststellt, dass die Temperatur des Verdampfers dann in einem Kältespeichermodus zu steuern ist, wenn die Geschwindigkeit des Fahrzeugs geringer als die vorbestimmte Geschwindigkeit ist.

11. Klimaanlage für Fahrzeuge (1) nach einem der Ansprüche 1 bis 9, wobei der Fahrzustand des Fahrzeugs anhand eines Ergebnisses des Vergleichs zwischen der Verzögerung des Fahrzeugs und der vorbestimmten Verzögerung bestimmt wird und
die Steuereinrichtung (35) feststellt, dass eine Temperatur des Verdampfers dann in einem Normalmodus zu steuern ist, wenn die Verzögerung des Fahrzeugs geringer als die vorbestimmte Verzögerung ist, und feststellt, dass die Temperatur des Verdampfers dann in einem Kältespeichermodus zu steuern ist, wenn die Verzögerung des Fahrzeugs mindestens die vorbestimmte Verzögerung ist.

12. Klimaanlage für Fahrzeuge nach einem der Ansprüche 1 bis 11, ferner mit:
einem Kältespeicherwärmetauscher (57), der stromabwärts des Verdampfers (5) in einem Luftstrom vorgesehen und in der Lage ist, durch vom Verdampfer (5) gekühlte Luft gekühlt zu werden, und
einer Kältespeicherwärmetauschertemperaturerfassungseinrichtung (58), die eine Temperatur des Kältespeicherwärmetauschers erfasst, wobei
die Steuereinrichtung (35) in der Lage ist, die Temperatur des Kältespeicherwärmetauschers zu steuern, indem sie einen Betriebszustand des Kompressors (23) steuert, und
die Steuereinrichtung (35) dann, wenn die Steuereinrichtung (35) feststellt, dass die Temperatur des Kältespeicherwärmetauschers in einem Normalmodus zu steuern ist, den Betriebszustand des Kompressors (23) so steuert, dass die von der Kältespeicherwärmetauschertemperaturerfassungseinrichtung (58) erfasste Temperatur des Kältespeicherwärmetauschers sich einer aus der Normalmodus-Solltemperaturkarte eingebrachten Solltemperatur des Kältespeicherwärmetauschers nähert, und
die Steuereinrichtung (35) dann, wenn die Steuereinrichtung (35) feststellt, dass die Temperatur des Kältespeicherwärmetauschers in einem Kältespeichermodus zu steuern ist, den Betriebszustand des Kompressors (23) so steuert, dass die von der Kältespeicherwärmetauschertemperaturerfassungseinrichtung (58) erfasste Temperatur des Kältespeicherwärmetauschers sich einer aus der Kältespeichermodus-Solltemperaturkarte eingebrachten Solltemperatur des Kältespeicherwärmetauschers nähert.

13. Fahrzeug, an dem die Klimaanlage für Fahrzeuge nach einem der Ansprüche 1 bis 12 montiert ist.

## Revendications

1. Installation de conditionnement d'air pour véhicule (1) qui est montée sur un véhicule qui est en mesure de rouler au moyen d'un moteur (31), et qui comporte une fonction de marche/arrêt automatique pour moteur en mesure de démarrer et d'arrêter le moteur de manière automatique, l'installation de conditionnement d'air pour véhicule (1) comportant :
un cycle de réfrigération (22) qui est constitué par le raccordement approprié d'un compresseur (23) qui est entraîné en utilisant le moteur (31) en tant que source d'entraînement et qui comprime un réfrigérant, un condenseur (24) qui condense le réfrigérant comprimé, un dispositif de décompression et de détente (26) qui décomprime et détend le réfrigérant condensé, et un évaporateur (5) qui évapore le réfrigérant décomprimé et détendu et présente une fonction de stockage de froid au moyen d'une tuyauterie,
un moyen de détection de température d'évaporateur (21) qui détecte une température de l'évaporateur (5), et
un moyen de commande (35) qui commande un état de fonctionnement du compresseur (23),
le moyen de commande (35) étant en mesure de commander la température de l'évaporateur (5) en commandant l'état de fonctionnement du compresseur (23),
le moyen de commande (35), lorsque le moyen de commande (35) détermine que la température de l'évaporateur doit être commandée selon un mode normal, commandant l'état de fonctionnement du compresseur (23) de telle sorte que la température de l'évaporateur détectée par le moyen de détection de température d'évaporateur (21) s'approche d'une température de consigne de l'évaporateur introduite à partir d'une carte de températures de consigne pour mode normal, et
le moyen de commande (35), lorsque le moyen de commande (35) détermine que la température de l'évaporateur doit être commandée selon un mode de stockage de froid, commandant l'état de fonctionnement du compresseur (23) de telle sorte que la température de l'évaporateur détectée par le moyen de détection de température d'évaporateur s'approche d'une température de consigne de l'évaporateur introduite à partir d'une carte de températures de consigne pour mode de stockage de froid,
**caractérisée en ce que**
la température de consigne définie par la carte de températures de consigne pour mode de stockage de froid et la carte de températures de consignes pour mode normal est basée sur la température d'air extérieur.

2. Installation de conditionnement d'air pour véhicule (1) selon la revendication 1, la carte de températures de consigne pour mode normal et la carte de températures de consigne pour mode de stockage de froid, dans une plage dans laquelle une charge thermique est une première valeur prédéterminée ou plus, étant établies de telle sorte que la température de consigne de l'évaporateur fixée dans la carte de températures de consigne pour mode de stockage de froid est inférieure à la température de consigne de l'évaporateur fixée dans la carte de températures de consigne pour mode normal, et
les températures de consigne présentant une première différence de température.

3. Installation de conditionnement d'air pour véhicule (1) selon la revendication 1 ou la revendication 2, la carte de températures de consigne pour mode normal et la carte de températures de consigne pour mode de stockage de froid, dans une plage dans laquelle une charge thermique est inférieure à la première valeur prédéterminée, étant établies de telle sorte que la température de consigne de l'évaporateur fixée dans la carte de températures de consigne pour mode de stockage de froid est inférieure à la température de consigne de l'évaporateur fixée dans la carte de températures de consigne pour mode normal,
les températures de consigne présentant une deuxième différence de température, et
la deuxième différence de température étant inférieure à la première différence de température.

4. Installation de conditionnement d'air pour véhicule (1) selon la revendication 3, la carte de températures de consigne pour mode normal et la carte de températures de consigne pour mode de stockage de froid, dans une plage dans laquelle la charge thermique est encore inférieure à une deuxième valeur prédéterminée qui est une valeur inférieure à la première valeur prédéterminée, étant établies de telle sorte qu'il n'y ait pas de deuxième différence de température.

5. Installation de conditionnement d'air pour véhicule (1) selon l'une des revendications 1 à 4, la carte de températures de consigne pour mode normal et la carte de températures de consigne pour mode de stockage de froid étant respectivement établies de telle sorte qu'une deuxième température de consigne de l'évaporateur correspondant à un état dans lequel une charge thermique est la deuxième valeur prédéterminée qui est inférieure à la première valeur prédéterminée, est fixée supérieure à une première température de consigne de l'évaporateur correspondant à un état dans lequel la charge thermique est la première valeur prédéterminée.

6. Installation de conditionnement d'air pour véhicule (1) selon l'une des revendications 1 à 5, l'évaporateur (5) comportant un agent de stockage de froid dont la phase change dans une plage de températures prédéterminée et qui est ainsi en mesure de stocker du froid ou de dégager de la chaleur, et
la température de consigne de l'évaporateur, dans la carte de températures de consigne pour mode normal, étant fixée de telle sorte qu'une température d'arrêt de compresseur à laquelle le moyen de commande arrête l'entraînement du compresseur (23) devient supérieure à la plage de températures prédéterminée de l'agent de stockage de froid dans une plage dans laquelle la charge thermique est la première valeur prédéterminée ou plus.

7. Installation de conditionnement d'air pour véhicule (1) selon l'une des revendications 1 à 5, l'évaporateur (5) comportant un agent de stockage de froid dont la phase change dans une plage de températures prédéterminée et qui est ainsi en mesure de stocker du froid ou de dégager de la chaleur, et
la température de consigne de l'évaporateur, dans la carte de températures de consigne pour mode de stockage de froid, étant fixée de telle sorte qu'une température de marche de compresseur à laquelle le moyen de commande met l'entraînement du compresseur (23) en marche devient inférieure à la plage de températures prédéterminée de l'agent de stockage de froid dans une plage dans laquelle la charge thermique est la première valeur prédéterminée ou plus.

8. Installation de conditionnement d'air pour véhicule (1) selon l'une des revendications 2 à 7, une charge thermique étant un signal général de conditionnement d'air qui est calculé sur la base au moins d'une température d'air extérieur du véhicule, d'une température d'air intérieur du véhicule, d'une température de consigne de conditionnement d'air fixée par un passager du véhicule, et une quantité de radiation solaire.

9. Installation de conditionnement d'air pour véhicule (1) selon l'une des revendications 2 à 7, une charge thermique étant une température d'air extérieur du véhicule.

10. Installation de conditionnement d'air pour véhicule (1) selon l'une des revendications 1 à 9, l'état de roulement du véhicule étant déterminé sur la base d'un résultat de la comparaison entre une vitesse du véhicule et une vitesse prédéterminée, et
le moyen de commande (35) déterminant qu'une température de l'évaporateur doit être commandée selon un mode normal lorsque la vitesse du véhicule est la vitesse prédéterminée ou plus, et déterminant que la température de l'évaporateur doit être commandée selon un mode de stockage de froid lorsque la vitesse du véhicule est inférieure à la vitesse prédéterminée.

11. Installation de conditionnement d'air pour véhicule (1) selon l'une des revendications 1 à 9, l'état de roulement du véhicule étant déterminé sur la base d'un résultat de la comparaison entre une décélération du véhicule et une décélération prédéterminée, et
le moyen de commande (35) déterminant qu'une température de l'évaporateur doit être commandée selon un mode normal lorsque la décélération du véhicule est inférieure à la décélération prédéterminée, et déterminant que la température de l'évaporateur doit être commandée selon un mode de stockage de froid lorsque la décélération du véhicule est la décélération prédéterminée ou plus.

12. Installation de conditionnement d'air pour véhicule selon l'une des revendications 1 à 11, comportant en outre :
un échangeur de chaleur de stockage de froid (57) qui est prévu dans un flux d'air en aval de l'évaporateur (5) et qui est en mesure d'être refroidi par de l'air refroidi par l'évaporateur (5),
un moyen de détection (58) de la température de l'échangeur de chaleur de stockage de froid qui détecte une température de l'échangeur de chaleur de stockage de froid,
le moyen de commande (35) étant en mesure de commander la température de l'échangeur de chaleur de stockage de froid en commandant un état de fonctionnement du compresseur (23), et
le moyen de commande (35), lorsque le moyen de commande (35) détermine que la température de l'échangeur de chaleur de stockage de froid doit être commandée selon un mode normal, commandant l'état de fonctionnement du compresseur (23) de telle sorte que la température de l'échangeur de chaleur de stockage de froid détectée par le moyen de détection (58) de la température de l'échangeur de chaleur de stockage de froid s'approche d'une température de consigne de l'échangeur de chaleur de stockage de froid introduite à partir de la carte de températures de consigne pour mode normal, et
le moyen de commande (35), lorsque le moyen de commande (35) détermine que la température de l'échangeur de chaleur de stockage de froid doit être commandée selon un mode de stockage de froid, commandant l'état de fonctionnement du compresseur (23) de telle sorte que la température de l'échangeur de chaleur de stockage de froid détectée par le moyen de détection (58) de la température de l'échangeur de chaleur de stockage de froid s'approche d'une température de consigne de l'échangeur de chaleur de stockage de froid introduite à partir de la carte de températures de consigne pour mode de stockage de froid.

13. Véhicule sur lequel est montée l'installation de conditionnement d'air pour véhicule selon l'une des revendications 1 à 12.
